Europäisches Patentamt

European Patent Office

Office européen des brevets

(19)

(11) Publication number: **0 409 318 A2**

# EUROPEAN PATENT APPLICATION

(12)

(21) Application number: **90201871.2**

(22) Date of filing: **11.07.90**

(51) Int. Cl.5: **G01P 3/80, G01P 3/50**

(30) Priority: **19.07.89 IT 2122989**

(43) Date of publication of application:
**23.01.91 Bulletin 91/04**

(84) Designated Contracting States:
**DE FR GB**

(71) Applicant: **ENIRICERCHE S.p.A.**
**Corso Venezia 16**
**I-20121 Milan(IT)**

Applicant: **SAVIO S.p.A.**
**Via Udine 105**
**I-33170 Pordenone(IT)**

(72) Inventor: **Giannini, Ivo**
**Via Giovanni Paisiello 47/C**
**I-00198 Rome(IT)**

(74) Representative: **Roggero, Sergio et al**
**Ing. Barzanò & Zanardo Milano S.p.A. Via**
**Borgonuovo 10 10**
**I-20121 Milano(IT)**

(54) **Method of determining thread speed.**

(57) A description is given of a method of determining the speed of threads, which exhibit irregularities when they are observed with forward-diffused light or with light emitted by fluorescence, featuring the following stages:
- illumination of the thread on two points which are 0.2 to 20 cm apart so as to define, for each of the two points, a height focus no greater than 100 μm and a width focus somewhat greater than that of the height, so that the whole section of the thread is illuminated;
- conveyance and detection of the light from each of the two points so as to generate a signal for each of the two points, dependent on the thread irregularities;
- amplification of the two signals;
- determination of the time that the thread takes to travel the distance between the two points, and hence its speed, by means of a function of correlation (fc) between the two amplified signals.

Fig.2

EP 0 409 318 A2

## METHOD OF DETERMINING THREAD SPEED

This invention involves a method of determining the thread speed in machines that use threads or produce them. These threads can be of any composition or structure provided that they exhibit irregularities when they are observed with forward-diffused light or with fluorescence methods.

By the term "threads" we mean all the filaments, or groups of filaments, or fibres, both natural and artificial: for example textile or cable fibres.

At the present moment the need is felt for precise speed measurements in machines that use threads, in the weaving of different manufactured items (stockings, fabrics and so on), or in those that produce the thread starting from the raw material.

In fact, control systems that can make the products of these machines more regular, determining the dimensions in relation to a predefined quality, are in general useful. In many cases the thread runs quickly over the supports of the machine without rotating parts and it is hence necessary to obtain speed measurements without interfering in the operation of the machine and if possible without touching the thread itself.

Speed measurements based on optical methods are suited to this purpose and, in fact, various methods described in the literature can give precise evaluations of the speed of moving objects based essentially on the frequency displacement of the object's reflected light wave (Doppler effect).

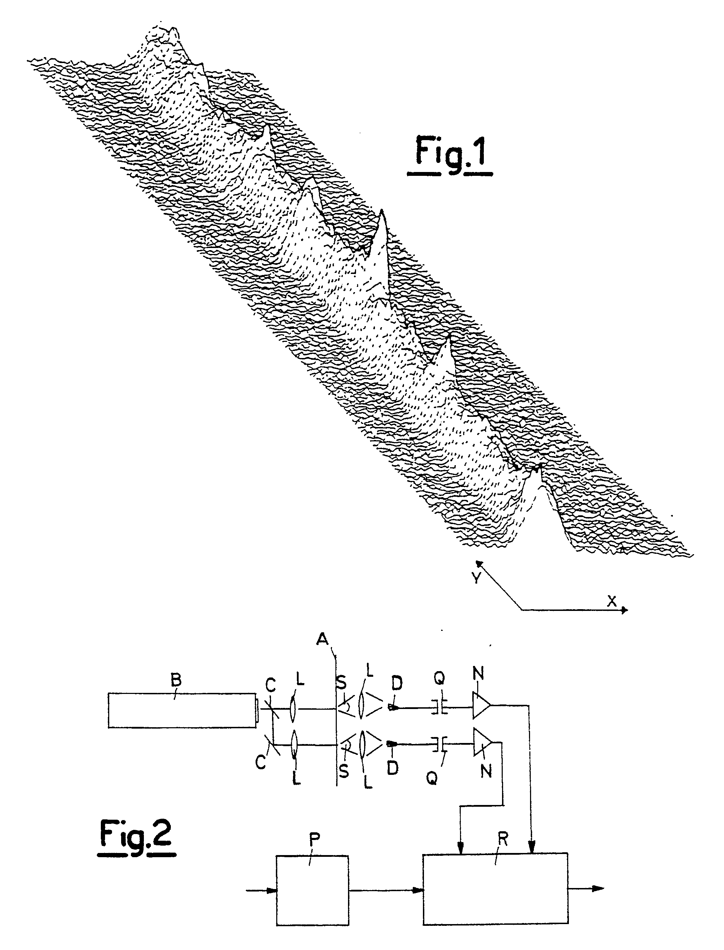

Surprisingly, it has been found that when a thread of material used in weaving, whether of natural origin (cotton, linen etc) or artificially produced (nylon), is observed with forward-diffused light or with fluorescence methods, various irregularities can be seen in the thread's optical characteristics, on dimensions of the order of 10 -100 $\mu$m. This means that the time needed for the thread to travel a defined distance between two spots, and hence the thread speed, can be calculated. An image of these irregularities observed, for example, in fluorescence, is shown in Fig. 1 (Wavelength 550 $\mu$m, excitation = 450-490 nm, EX = 0.336mm, Y = 1.406 mm).

The method used by this invention, which is generally simpler and more precise than previous optical methods, features the following stages:
- illumination of the thread on two points which are 0.2 to 20 cm apart, and preferably between 0.5 and 3 cm, so as to define, for each of the two points, a height focus no greater than 100 $\mu$m and a width focus somewhat greater than that of the height, preferably between 1 and 5 mm, so that the whole section of the thread is illuminated.
- conveyance and detection of light from each of the two points so as to generate a signal for each of the two points, dependent on the thread irregularities;
- amplification of the two signals;
- determination of the time that the thread takes to travel the distance between the two points, and hence its speed, by means of a function of correlation (fc) between the two amplified intensity signals;

The light source can be a laser (for example an He-Ne laser or a diode laser) or a high-pressure lamp (for example mercury vapour).

The light from each of the two points of the thread comes from these points either emitted by fluorescence or forward diffused.

In the case of forward-diffused light it is advisable to have a laser source.

The function of correlation (fc) between the two amplified signals, bound in the time interval t1-t2, can be as folows:

$$ f_c(\tau) = \int_{t_1}^{t_2} f_1(t) f_2(t + \tau)\, dt $$

where f1 and f2, the amplified signals, are two functions variable in time t; the function (fc) will be maximum for the value of $\tau$ corresponding to the time $\tau$ that the thread takes to travel the distance between the two points (focuses).

A further subject of this invention is the device for determining the speed of threads that exhibit irregularities when they are observed with forward-diffused light or with light by fluorescence using the above method. This device basically includes:
- one or two light sources
- 2 light detectors
- 2 amplification channels
- a digital or analog correlator.

The invention will now be described in greater detail with reference to the diagram in figure 2 which illustrates the preferred arrangement.

Thread (A) is observed at two points which are spaced at a distance the value of which is defined by the fact that two images of a laser source (B) are created by the optical system on the thread itself (also using mirrors (C) and lenses (L)).

The focusing optics must be cylindrical.

The observation can be made by employing the forward-diffused light and collecting the light transmitted in two opaque stoppers (S) and the light diffused within an angle, for example of about 30°, on a medium-large aperture optics which conveys it to the photodiodes (D).

Alternatively, the observation can be carried out by using the fluorescence light employing a large-aperture optics at 90° to the laser and conveying the light emitted by fluorescence on photomultipliers through a low pass filter.

It is also advisable to incorporate on the light path several diaphragms and further chromatic filters to reduce any effects due to environmental light.

The light observed on two photodiodes generates a signal of variable intensity due to the irregularities in the thread structure which can be observed with this type of illumination.

The electrical signal generated in this way is amplified in (N) after subtracting the continuous component through a coupling AC (in Q); in other words by subtracting the non-variable contributions due to the base and the continuous structure of the thread.

The two signals are then sent to a correlator (R).

The correlator performs the measurement of the function of correlation (fc) between the two input signals.

It measures the degree of correlation between the two signals and in our case this will be maximum for the value of $\tau$ corresponding to the time $\tau_0$ that the thread takes to travel the distance between the two laser focuses.

The measurement can be carried out by a correlator consisting of a relatively complex algorithm incorporated in a processor (P) and so the resulting precision can be high. However, a rather simplified digital correlator with a fairly low number of samplings can also be used, and still achieve relatively good precision.

For illustration purposes, we set out below the layouts for the various parts of the thread speed measurement instrument.

EXAMPLES 1-2-3

LIGHT SOURCE, FOCUSING AND DETECTION OPTICS

Example 1

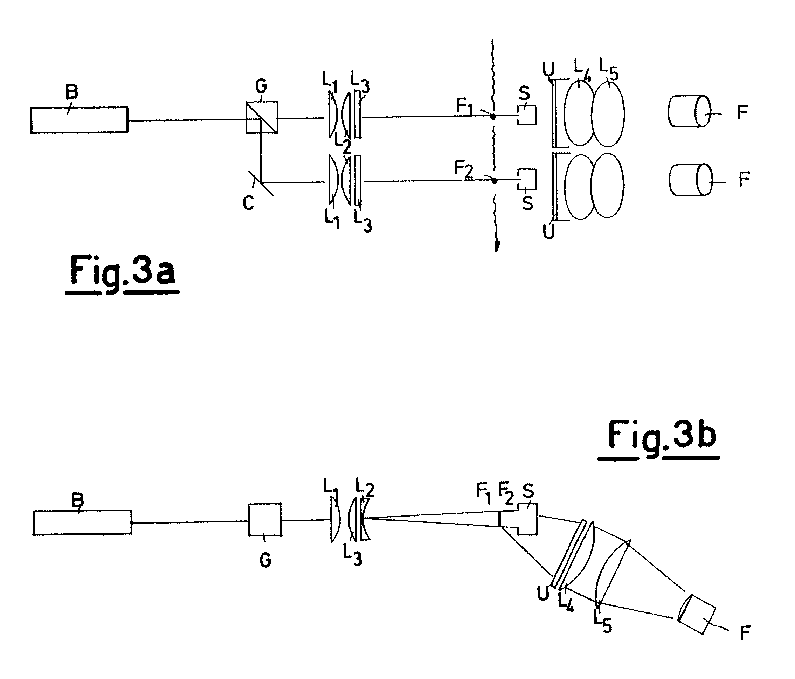

(see figure 3: a) frontal schematic view; b) top schematic view).

The source is an He-Ne laser (B) (with light emitted at $\lambda = 632$ nm) with about 1 mW power. A pair of cylindrical optics (L1 and L2: converging; L3 diverging) which follow the beam splitter (G) and the mirror or reflection prism (C) is necessary to obtain the two focuses (F1 and F2) in the horizontal line form. The large-aperture lenses for collecting the forward-diffused light (L4 and L5: converging) have a 20 mm focal length and 0.50 aperture. The photodiodes (F) are standard silicon devices (at this value $\lambda$ of these photodiodes generally have a response of 0.45 A/W). Fig. 3 also shows the stoppers (S) in which the laser beam is absorbed and the passband filter (U) ($\lambda$ coincides with $\lambda$ of the laser).

Example 2

(See Fig. 3)

The light source is a diode laser with a single heterojunction (B). A 90 mW Telefunkenn type is chosen from amongst all the available models. This emits with a relatively small aperture (<0.5) compared to that usually found on this type of device. The GaAlAs diode wavelength is between 670 and 870 nm. The optics system is still that of example 1.

If a device is selected which emits on a larger aperture a cylindrical coupling optics must still be used but it must be different to the previous one.

Example 3

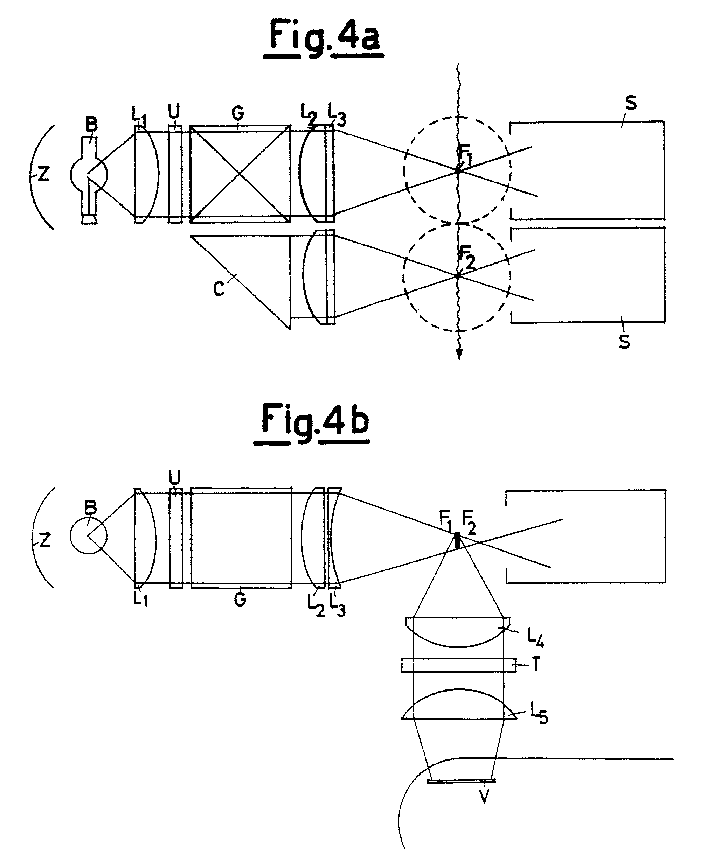

(See Fig. 4: a) Frontal schematic view; b) top schematic view).

The source (B) is a 100 W high-pressure mercury vapour lamp (Osram HBO 100 W/2).

The focusing optics incorporates a converging lens arrangement as shown in Fig. 4. The beam splitter (G) and the total reflection prism (C) are somewhat larger than in the previous examples. Low pass filters (T) and a pass band filter centred at $\lambda = 366$ mm (or at $\lambda = 435$ mm) (U) are interposed, whilst the distance between the two measurement spots is about 3 cm. The observation optics system is arranged at 90° relative to the previous optics and it comprises, for each channel, two spherical lenses that collect the light on the detectors F1 and F2. These components consist of photomultipliers (V).

In Fig. 4 the stoppers are shown by (S) and a concave mirror is represented by Z.

EXAMPLES 4-5-6: CORRELATORS

Example 4

## DIGITAL CORRELATOR

The speed measurement electronics in this case are achieved by processing a digital signal produced starting from the analog signal given by the detectors. The variable part of the signal, which enters the amplifiers through a coupling AC, is amplified and digitised on two levels with a suitable comparator, the threshold of which is regulated by the control system, through a digital analogue converter (DAC). In this arrangement the two digital memories which record the signal are compared with a variable programmed delay by the control logic acting on the address of the memories themselves.

The correlation function is calculated by the arithmetic unit adding the product of the two digital signals on quite a long sequence, for example a thousand successive samplings, in relation to a thousand successive clock values. Thereafter the total value is transferred to the CPU. The operation must be repeated for different delay values so that the value for which fc is maximum can be calculated. If, for example, the time $\tau_0$ is expected to be 2.0 ms, then the calculation of the function can be carried out for the $\tau$ values included between 1.2 and 2.2 ms.

The system clock can easily work at frequencies around 1 MHz.

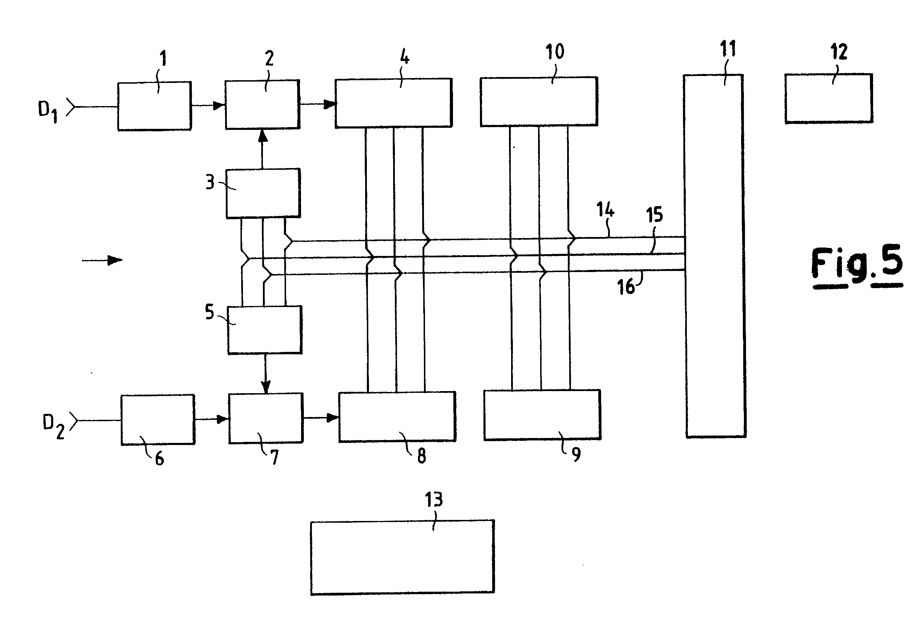

Fig. 5 gives the diagram of the digital correlator in which:
1. Photo Diode Amplifier D1
2. Comparator D1
3. Digital to Analog Converter D1
4. Shift Register D1
5. Digital to Analog Converter D2
6. Photo Diode Amplifier D2
7. Comparator D2
8. Shift Register D2
9. Program ROM
10. Data RAM
11. Central Processor Unit (CPU)
12. Master Clock
13. Power
14. Data Bus
15. Address Bus
16. Control Bus

Example 5

## DIGITAL CORRELATOR

A variant of the digital correlator described in the previous example can be obtained by carrying out the whole calculation of the correlation function directly in the CPU. In the diagram the digital signal is generated as in the previous case by regulating the threshold of a comparator through a DAC controlled by the system. The memories and the shift registers are programmed directly by the CPU according to a machine clock that depends on the type of microprocessor used, and easily reaches 1 MHz.

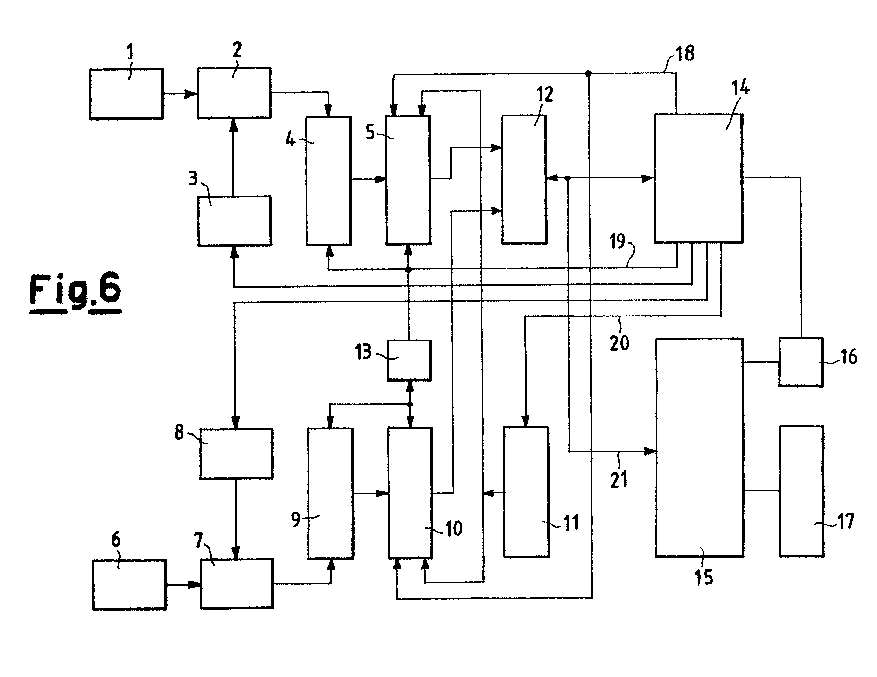

Fig. 6 illustrates the digital correlator diagram in which:
1. Photo Diode Amplifier D1
2. Comparator
3. Digital to Analog Converter
4. Shift Register
5. Data Memory
6. Photo Diode Amplifier D2
7. Comparator
8. Digital to Analog Converter
9. Shift Register
10. Data Memory D2
11. Address Memory Counter
12. Arithmetic Logic Unit
13. Delay
14. Logic Control
15. Central Processor Unit
16. Control Clock
17. Program Memory
18. Read Data
19. Write Data
20. Clock Address
21. Data Bus

Example 6

## ANALOG CORRELATOR

In this example the signal from the detectors is transferred to the central processor in the form of 8-12 bit digital information for each sampling point. This is obtained directly by the analog signal through an analog digital converter (ADC) coupled to the two channels by a multiplexer.

It is clear that the converter must be especially fast if the speed to be measured is very high.

The correlation function is calculated with great precision and the time required to carry out the calculation will generally be higher than in the previous examples.

The calculation is executed by the microprocessor adding from 200 to 500 values of the product of the two signals and transferring the total to a memory, for each value of the delay between the two signals. The calculation is repeated, as in the previous case, for the values of $\tau$ around that corresponding to the presumed speed, so as to illustrate the maximum of fc.

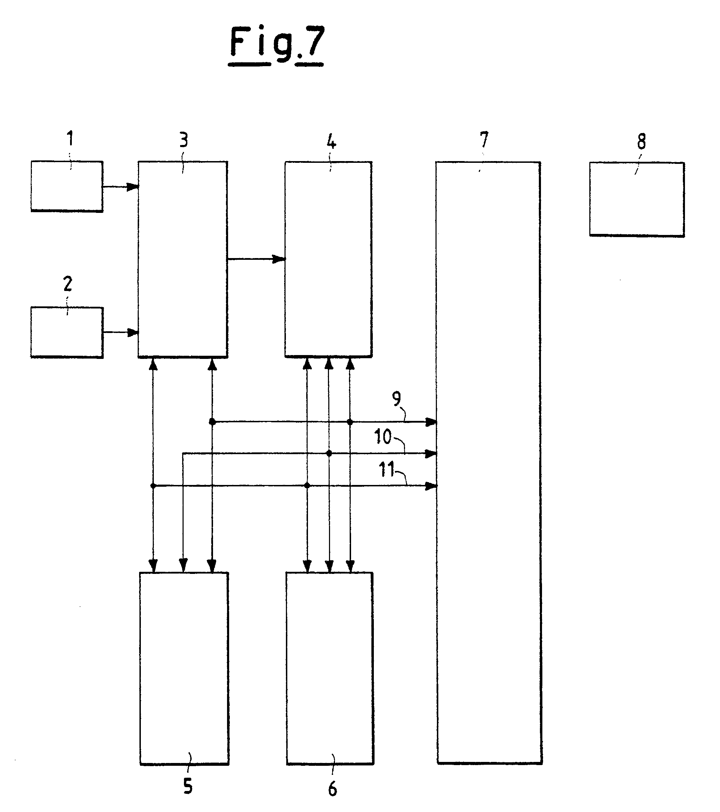

Fig. 7 gives the diagram for the analog correlator in which:
1. Photo Diode Amplifier A
2. Photo Diode Amplifier B
3. Two Channel Analog Multiplexer
4. Analog to Digital Converter
5. Program Memory
6. Data Memory
7. Central Processor Unit
8. Master Clock
9. Control
10. Data
11. Address

## Claims

1) Method of determining the speed of threads, which exhibit irregularities when they are observed with forward-diffused light or with light emitted by fluorescence,featuring the following stages:
-illumination of the thread on two points which are 0.2 to 20 cm apart so as to define, for each of the two points, a height focus no greater than 100 $\mu$m and a width focus somewhat greater than that of the height, so that the whole section of the thread is illuminated.
- conveyance and detection of light from each of the two points so as to generate a signal for each of the two points, dependent on the thread irregularities;
-amplification of the two signals;
-determination of the time that the thread takes to travel the distance between the two points, and hence its speed, by means of a function of correlation (fc) between the two amplified signals.
2) Method as in claim 1 where the two illuminated points of the thread are between 0.5 and 3 cm apart.
3) Method as in claim 1 where the illumination source is a laser.
4) Method as in claim 3 where the light source is an He-Ne laser.
5) Method as in claim 3 where the laser source is a diode laser.
6) Method as in claim 1 where the illumination source is a mercury vapour high pressure lamp.
7) Method as in claim 1 where the light from each of the two points is emitted from the said points by fluorescence.
8) Method as in claim 1 where the light from each of the two points is forward-diffused from the said points.

9) Method as in claim 1 where the focus width, for each of the two points, falls between 1 and 5 mm.
10) Method as in claim 1 where the function of correlation (fc) between the two amplified signals, bound in the time interval t1-t2, is as follows:

$$f_c(\tau) = \int_{t_1}^{t_2} f_1(t) \, f_2(t+\tau) \, dt$$

where f1 and f2, the amplified signals, are two functions variable in time t, which are maximum for the value of $\tau$ corresponding to the time $\tau$ that the thread takes to travel the distance between the two points.
11) Device for determining the speed of threads which exhibit irregularities when they are observed with forward-diffused light or with light emitted by fluorescence by means of the method as in claim 1, which basically feature:
- one or two illumination sources
- two light detectors
- 2 amplification channels
- a digital or analog correlator

Fig.1

Fig.2

**Fig.3a**

**Fig.3b**

EP 0 409 318 A2

# Fig.4a

# Fig.4b

Fig.5

**Fig.6**

EP 0 409 318 A2

Fig.7